# EUROPEAN PATENT SPECIFICATION

(11) **EP 2 475 869 B1**
(45) Date of publication and mention of the grant of the patent: **11.03.2015**
(21) Application number: 10757491.5
(22) Date of filing: 07.09.2010
(51) Int. Cl.: F03B 13/14

(54) **WAVE ENERGY CONVERSION SYSTEM AND METHOD FOR CONVERTING WAVE ENERGY.**
WELLENENERGIEUMWANDLUNGSSYSTEM UND VERFAHREN ZUR UMWANDLUNG VON WELLENENERGIE
SYSTÈME DE CONVERSION D'ÉNERGIE DES VAGUES ET PROCÉDÉ DE CONVERSION DE L'ÉNERGIE DES VAGUES

(30) Priority: 07.09.2009 NL 2003445
(43) Date of publication of application: 18.07.2012
(73) Proprietor: Koninklijke BAM Groep N.V., 3981 AZ Bunnik (NL)
(72) Inventor: TEN OEVER, Erik, NL-2315 KM Leiden (NL)
(74) Representative: EP&C
(86) International application number: PCT/NL2010/050566
(87) International publication number: WO 2011/028123

(56) References cited:
- EP-B1- 1 518 052
- WO-A1-2005/095790
- DE-A1- 4 331 988
- GB-A- 2 445 945
- WATTS K C ET AL: "OCEAN WAVE ENERGY CONVERSION DEVICES POPULAR TODAY", TRANSACTIONS OF THE CANADIAN SOCIETY FOR MECHANICAL ENGINEERING, CANADIAN SOCIETY FOR MECHANICAL ENGINEERING, MONTREAL, CA, vol. 9, no. 2, 1 January 1985 (1985-01-01) , pages 105-113, XP001051546, ISSN: 0315-8977

## Description

The invention relates to a wave energy conversion system, according to the preamble of claim 1.

WO-A1-2005/095790 discloses a wave energy conversion system, based on oscillating water columns with a vertical portion and a horizontal portion. The system contains three vertical columns, which are partly flooded with water. Each of these vertical columns is extended horizontally at its lower end by a duct reaching in an up-wave direction and terminating in a port opening to the sea. The cross-sectional areas of the horizontal ducts are smaller than those of their attached vertical columns. Air above the water in the vertical columns is held in a room which connects via an air-driven turbo-generator to the outside of the system. The water of each of the columns may oscillate. Each of the oscillating water columns has a resonance period, which differs from one column to the other. When the resonance period of one column is close to the peak period of waves at the port of the relevant duct, then the water in this column will oscillate in resonance with the waves. The air above the water will be cyclically compressed and decompressed, which causes the turbo-generator to rotate.

A problem of the known system is that the overall efficiency is low.

The invention aims to overcome the above mentioned problem at least partially, or to provide an alternative solution. In particular the invention aims to achieve a wave energy conversion system with a higher efficiency than that of the known system. The invention achieves this aim by a system as defined in claim 1.

A wave energy conversion system comprises a water duct, a free surface chamber, and an energy conversion device. The free surface chamber is delimited by walls, is in use partially filled with a liquid and partially filled with a gas, and defines a free surface having a free surface area at a level where the liquid adjoins the gas. The water duct extends from a first end, which is open to an environment of the system, to a second end, which is open to the free surface chamber. In use the water duct is filled with the liquid. The liquid in the free surface chamber and the water duct forms a mass-spring system wherein surface waves in the water basin cause the free surface to rise and fall periodically. The energy conversion device is arranged to convert fluid-dynamic energy of the liquid or the gas into a different form of energy. At least one wall is displaceable, and the system further comprises displacement means, which displacement means are operable for displacing the displaceable wall such that the size of the free surface area is adjustable in order to adjust the natural period of the mass-spring system.

Thanks to the displaceable wall and the displacement means, the natural period of the system is adjustable, so that it can correspond to the peak period of the waves. Compared to the prior art, this means that the system can be in resonance with more than three peak periods, while using less space as only one horizontal duct with chamber is required. Accordingly, the energetic efficiency is improved, as the system will match the peak period of the wave during more time than with the prior art device. Moreover the reduced space requirement may lead to cost reductions.

It is noted that an article by Watts K.C. et al, titled "Ocean Wave Energy Conversion Devices Popular Today", published in the Transactions of the Canadian Society for Mechanical Engineering, mentions a TUNS Adjustible Walled OWC. However, in this case the shape of the oscillating column is adjusted, by rotating inclined walls. This is different from the current invention in that the inclined walls are not moved linearly. Moreover, the cross-section of the water column is not constant over its height because of the inclined walls. Accordingly, the mass-spring system is non-linear. Moreover, the article mentions that the experiments indicated an increase in bandwidth for chamber walls that decreased in the vertical direction, contrary to theoretical results. A further difference is that the total volume of the water in the system of the current invention fluctuates relatively less than in that of the TUNS Adjustable Walled OWC, as there is also water in the water duct of the current invention.

Advantageous embodiments are disclosed in the dependent claims.

Preferably, the wave energy conversion system further comprises control means, wherein the control means are adapted to determine a peak period of a current sea wave pattern of the sea, and to control the displacement means such, that the natural period of the mass-spring system corresponds to the peak period. Providing control means results in a convenient manner of adjusting the displaceable wall.

In an embodiment, the displacement means comprise at least one push bar which is connected at a first end with first movable connection means to the displaceable wall and at a second end with second movable connection means to the fixed part. Displacement means comprising a push bar result in slender constructions which may fit in a caisson.

Preferably, the water duct has a substantially constant cross-sectional area, and the displaceable wall is displaceable such, that the free surface area is adjustable from half the cross-sectional area of the water duct to three times, preferably two times, the cross-sectional area of the water duct. Limiting the ratio between these boundaries results in a relative small widening, or narrowing of the system that the liquid flows through. Losses due to turbulence are minimized in this manner.

In an embodiment, the first end of the water duct merges into an oblique upper wall section, which is at an angle of 20° to 60° with a horizontal plane. Such a wall section helps wave crests to enter the water duct.

Preferably, the first end of the water duct merges into a convex lower wall section. Such a convex lower wall section minimises the resistance of liquid particals near an inlet of the water duct.

In an embodiment, the displaceable wall is positioned opposite the second end of the water duct. By positioning the displaceable wall opposite the second end of the water duct, rather than at the same side as the water duct, it is relative easy to design the free surface chamber such that the losses due to turbulence near the opening of the water duct into the free surface chamber are minimised for all positions of the displaceable wall.

Preferably, the second end of the water duct is positioned lower than the first end of the water duct. This enables the first end of the water duct, which is open to the sea, to be positioned as close to the sea water level as possible, so that a maximum velocity of the wave induced water motion is experienced. At the same time, having the second end lower enables the free surface chamber to have sufficient height.

In an embodiment, the volume of the free surface chamber, with the displaceable wall positioned such that the free surface area is maximal, equals at least the water volume of one wave with maximum operational height and length. By making the free surface chamber so large, as much energy as possible is absorbed of every wave.

Preferably, the wave energy conversion system further comprises an air duct, wherein the air duct extends from the free surface chamber to the environment of the system, so that in use the air duct provides a gas connection between the gas in the free surface chamber and outside air. Having an air duct reduces the dampening effect on the spring-mass system of the air above the free surface.

In an embodiment, a wall of the free surface chamber is positioned opposite the second end of the water duct, which wall has a concavely curved lower section. The concavely curved lower section reduces turbulence of the in and out flowing liquid.

The invention further relates to a method for converting wave energy, according to claim 12.

The invention will be explained in more detail, on the basis of preferred embodiments, as shown in the attached drawings, in which:
Fig. 1 shows a wave energy conversion system with a hinged parallelogram and a linear generator;
Fig. 2 shows a wave energy conversion system with a hinged parallelogram and an air turbine;
Fig. 3 shows a first alternative back wall with flexible water filled bags;
Fig. 4 shows a second alternative back wall with a prism;
Fig. 5 shows a third alternative back wall with a bottom pivot; and
Fig. 6 shows a fourth alternative back wall with a top pivot.

A wave energy conversion system according to the present invention is denoted with the reference number 1. The wave energy system comprises a frame, in the form of a hollow caisson 2. The caisson 2 is provided on a foundation 4 on a sea bed 6. One side of the caisson 2 is exposed to a sea 8. This side of the caisson 2 will be denoted as sea side 10. The other side of the caisson 2 will be called the land side 12, although it is noted that in practice there may be water on this side of the caisson as well. However the sea side 10 of the caisson 2 is the side that is exposed to waves of the sea 8, while the land side 12 is not exposed to waves or is exposed to a lesser extend.

The wave energy conversion system 1 further comprises a water duct 14, a free surface chamber 16, and an energy conversion device 18, here in the form of a linear generator 20. The water duct 14 extends from a first end at the sea side 10, where it is open to the sea at via an inlet 22, to a second end at the land side 12 where it opens into the free surface chamber 16 via an opening 24. The inlet 22 is positioned higher than the opening 24, so that the water duct 14 is tilted with respect to a horizontal plane. Thanks to this tilt the inlet 22 can be as close to a minimum water level 26 of the sea 8 as possible, while providing sufficient water height in the free surface chamber 16.

The free surface chamber 16 is delimited by a front wall 28, a back wall 30 and non-shown side walls. The back wall 30 of the free surface chamber is movable connected to a back wall 31 of the caisson 2 at the land side 12. Movable connection means are in this case integrated with displacement means 32, which comprise two hinged push bar parallelograms 34. The displacement means 32 further comprises a screw spindle 36 and an electromotor 38 which is attached to the top of the upper push bar parallelogram 34.

The linear generator 20 comprises a steel plate 40 which is mounted slidably in the longitudinal direction of the water duct 14. The linear generator further comprises electrical coils 42 which are provided in the walls of the water duct 14.

The inlet 22 comprises an oblique upper wall section 44 which has an angle with a horizontal plane of substantially 45°. The water inlet 22 further comprises a convex lower wall section 46. The shape of this convex curved lower section 46 substantially corresponds to the profile of the amplitude of water particles under a surface wave.

The back wall 30 of the free surface chamber 16 is at least at its bottom part provided with a concave curved bottom wall part 48. The concave curved bottom wall part 48 guides the flow in the chamber and reduces turbulence in the free surface chamber 16. The free surface chamber 16 is open to an environment via an air duct 50 which is provided at the top of the free surface chamber 16.

In use, the water duct 14 is filled with a liquid, in this case sea water of the sea 8. The free surface chamber is partly filled with sea water as well. In an equilibrium position, a level 52 of the sea water in the free surface chamber 16 is the same level as the level 26 of the sea 8 outside. At the level 52, the free surface chamber defines a free surface 54. Above the free surface 54, there is a gas, in this case outside air which communicates through the air duct 50 with an outside environment of the caisson 2. The outside air adjoins the sea water at the free surface 54. The free surface chamber 16 of this and other embodiments of the invention have an area of the free surface 54 which is substantially constant at different levels, in particular substantially constant over substantially the whole height of the free surface chamber 16.

The caisson 2 and its water inlet 22 are designed such, that the water inlet 22 is below design low water. As design low water, lowest astronomical tide may be chosen, or the mean low sea level or a low sea level which is chosen based on the frequency or time of exceeding this level.

The sea 8 will have surface waves in a wave pattern with a peak period. A surface wave has two energy states: kinetic and potential energy. The kinetic energy is allocated in the circular, or ellipsoidal, water motion. The potential energy is fluctuating with the wave crest and wave trough. Accordingly, water particles in a wave crest arriving at the inlet 22 have a velocity directed towards the inlet 22 and a water pressure which is higher than the water pressure at the same level in the free surface chamber, assuming that the level 52 of the sea water in the free surface chamber 16 is at its equilibrium position, i.e. at the free surface 54. The velocity of the water particles induces water to enter the water duct 14. At the same time, the pressure difference between the sea water outside of the inlet 22 and inside the free surface chamber 16 causes water to flow through the water duct 14 into the free surface chamber 16 as well. At a wave trough this effect is reverse. The velocity of the water particles is directed away from the inlet 22 and the water pressure outside of the inlet 22 is lower than that inside of the free surface chamber 16. As a result, water will flow out of the free surface chamber 16, through the water duct 14 into the sea 8.

During the rising and falling of water in the free surface chamber 16, the water in the free surface chamber acts as a spring. If the water level in the free surface chamber 16 is higher than the mean water level outside at the inlet 22, then the resulting pressure at the opening 24 exerts an outward directed force on the water in the water duct 14. A reduced water level in the free surface chamber compared to the mean outside level at the inlet 22 results in a decrease of the water pressure at the opening 24 and a corresponding inward directed force on the water in the water duct 14. These pressure induced forces increase the water velocity in the water duct 14 during the first stage of the inward or outward flowing of water, while it counteracts the water flow in the final stage of the inflow or outflow. This spring effect forms in combination with the mass defined by the mass of water in the water duct 14 and the free surface chamber 16 a mass-spring system.

A mass-spring system has a natural period which is a result of both the spring constant and the mass of the system. The spring constant is defined by several variables, including the ratio between the cross-sectional area of the free surface chamber 16 and the water duct 14. Thanks to the invention, it is possible to adjust both the mass and the spring constant in a continuous manner, by adjusting the back wall 30 of the free surface chamber 16. Moving the back wall 30 in the direction of the front wall 28 reduces the area of the free surface 54, which increases the spring constant, and reduces the mass of the water in the free surface chamber 16. As a result, the natural period of the system is decreased. Moving the back wall 30 away from the front wall 28 increases the free surface 54, reducing the spring constant, and increases the total water mass. Both effects result in an increase of the natural period of the system.

If the natural period of the system is equal to or close by the natural period of the sea wave pattern, then the mass-spring system will come in resonance. Every sea wave at the inlet 22 adds energy to the system.

Energy is harvested from the mass-spring system via the energy conversion device, in this embodiment the linear generator 20. The sea water flowing backwards and forwards in the water duct 14 moves the steel plate 40 along. The movement of this steel plate causes a changing magnetic field in the coils 42, which leads to electric currents. These currents are transformed and transported to end users in a known (but not shown) manner outside of the system.

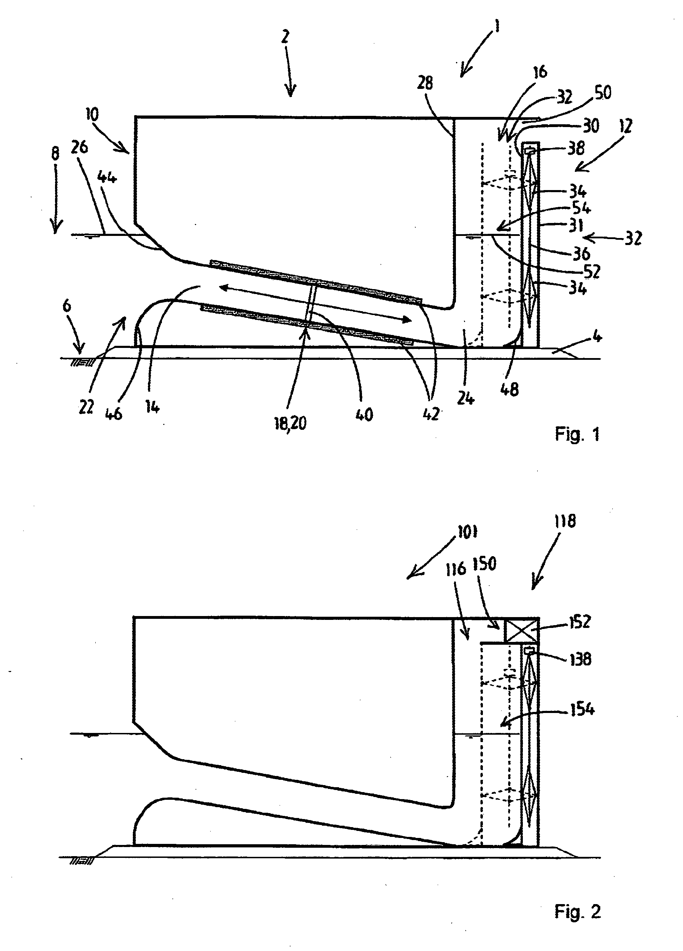

The displacement of the back wall 30 may be done manually or automatically. In the manual system the current and/or expected natural period of the sea waves is determined, either based on the experience of the controller of the system or on the basis of measurements. This natural period of the sea waves should correspond to the natural period of the mass-spring system. A relation between the natural period of the mass-spring system and the position of the displaceable back wall 30 may be present in a graph or a table, based on tests or calculations. The operator of the wave energy conversion system reads the relevant setting and adjusts the position of the displaceable back wall 30 via the displacement means 32. In this embodiment this implies that the electromotor 37 is operated causing the screw spindle 36 to rotate. This rotation is translated at the top and bottom hinge of the hinged push bar parallelograms 34 into a linear movement, moving the two hinges away from each other, or towards each other depending on the rotational direction of the screw spindle 36. Moving the hinges towards each other causes the parallelogram to become wider, which results in the movement of the displaceable back wall 30 towards the front wall 28, as can be seen when comparing the solid lines of fig. 1 with the dashed lines.

The wave energy conversion system may also be controlled by a (non-shown) control unit which is connected to a measuring device for measuring the natural period of the sea waves. Such measuring device may be a wave buoy or a camera (e.g. on board of a satellite), radar, etc. The measured natural period is fed by the control unit into an algorithm, or a look-up table, in order to determine the corresponding required position of the displaceable back wall 30. If the required position diverges from the current position, then the electromotor 38 is controlled in the above described manner. Preferably, the control system comprises a feed back by a (non-shown) position, angular or rotational sensor to determine the actual position of the moveable back wall 30. Preferably, the moveable back wall 30 is not adjusted in view of every individual wave arriving at the sea side 10 of the wave energy conversion system 1, in order to avoid energy losses caused by displacing the displaceable back wall 30. Rather, the displaceable back wall 30 is adjusted periodically, e.g. every 15 to 30 minutes.

The wave energy conversion system 1 is designed such that it can absorb one whole wave, under maximum design conditions. The whole wave is in this context defined as the amount of water of the wave crest above the average sea level, plus the absolute value of the absent water at the wave trough under the average sea level. The maximum design wave is a wave with a maximum height that occurs at a sea with a maximum peak period for which the wave energy conversion system 1 is designed. For the maximum design wave with a given length and height, the water volume of the whole wave is approximately L·H/π-per meter of wave. This amount of water has to be accommodated in the free surface chamber 16. The height of this free surface chamber 16 is delimited by the dimensions of the caisson 2. The height of the maximum water column that can be accommodated in the free surface chamber 16 may be less than this, as the equilibrium water level in the free surface chamber 16 may have a minimum and maximum value due to tidal differences. Starting the design with a given water column height, the calculated water volume of the design wave results in a required maximum free surface area and hence the position of the front wall 28 relative to the displaceable back wall 32 at its backmost position. Then the dimensions of the water duct 14 can be chosen such that the spring constant and the mass of the resulting spring mass system result in a natural period which corresponds to the natural period of the maximum design wave.

The above considerations may lead to the following dimensions, based on the designs conditions on the west coast of Europe which is exposed to the Atlantic Ocean. A sea level of minus 11 meter has been assumed. The wave energy conversion system 1 is designed to achieve an optimum performance for the following wave conditions: hₘᵢₙ is 0.25 meter, hₘₐₓ is 2.5 meter, minimum wave period is 6 seconds, and the maximum wave period is 15 seconds. The maximum wave (H=2.5m T=15s) corresponds to a volume per wave (of 1 meter width) of 125 m³. Based on the design conditions, the following functional dimensions are adopted:

| | |
|---|---|
| Caisson width | 30 meter |
| Caisson height | 23 meter |
| Water duct length | 20 meter |
| Water duct height | 4 meter |
| Minimum width free surface chamber | 2 meter |
| Maximum width free surface chamber | 8 meter |
| Level centre line water duct front | 6 meter (above seabed) |
| Level centre line water duct front | 3 meter (above seabed) |

For larger design waves the dimensions of the water duct height and width of free surface chamber should be increased to accommodate the water volume per wave.

An alternative wave energy conversion system according to the invention is denoted 101 in fig. 2. Components of the system 101 which are equal to, or correspond to, components of the system 1 are denoted with the same reference numeral to which 100 is added. These components will not be described in detail below. The wave energy conversion system 101 comprises an alternative energy conversion device 118 in the form an air turbine 152 which is placed in the air duct 150. In this embodiment, the air above the free surface 154 can only enter or leave the free surface chamber 116 via de air turbine 152. Preferably, an air turbine 152 is chosen which is driven by both the incoming and the outgoing flow of air, such as a wells turbine.

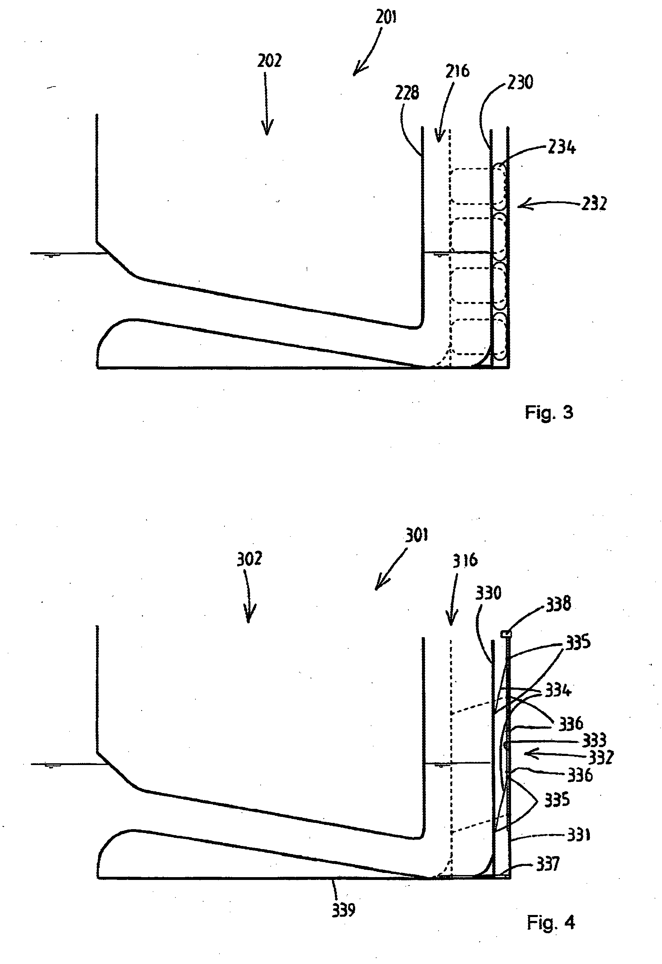

Figs. 3-6 show alternative displaceable back walls with corresponding displacement means. These may be combined with either of the energy conversion devices 18 and 118 of the previous figures or any other energy conversion device which operates on the kinetic and/or potential energy in the flow of water, or air. Only the parts of the back wall and displacement means which differ from the previous embodiments, and the related parts of the system, are shown in figures 3-6 and described below.

The wave energy conversion system 201 of fig. 3 comprises a caisson 202, a free surface chamber 216, a front wall 228, and a displaceable back wall 230. The displaceable back wall 230 is moved linearly via displacement means 232, in this embodiment comprising multiple flexible water filled bags 234, (non-shown) hoses and pump means. The in this case four flexible water filled bags 234 are filled with sea water via the hoses and pump means. The pump means are controlled in a comparable manner as in the firstly described wave energy conversion system 1. Pumping water in to the flexible water filled bags 234 results in the displaceable back wall 230 being moved towards the front wall 228. Pumping water out of the flexible water filled bags 234 results in the reverse.

A wave energy conversion system 301 comprises a caisson 302, a free surface chamber 316, a front wall 328, a displaceable back wall 330 and displacement means 332 comprising push bars 333, and 334 which are connected with each other and the moveable back wall 330 via hinges 335 to form a prism shape. A vertical push bar 333 extends along the back wall 331 of the caisson 302 and is connected thereto via movable connection means, in this case vertical sliding connection means 336. The displaceable back wall 330 is slidably connected with its lower part to a bottom part 339 of the caisson 302 via further movable connection means, in this case horizontal slidable connection means 337. An electro motor 338 pushes or pulls the vertical push bar 333 upwards or downwards which translates via the two tilting push bars 334 into a horizontal movement of the back wall 330, along the horizontal slidable connection means 337, as shown by dashed lines in fig. 4.

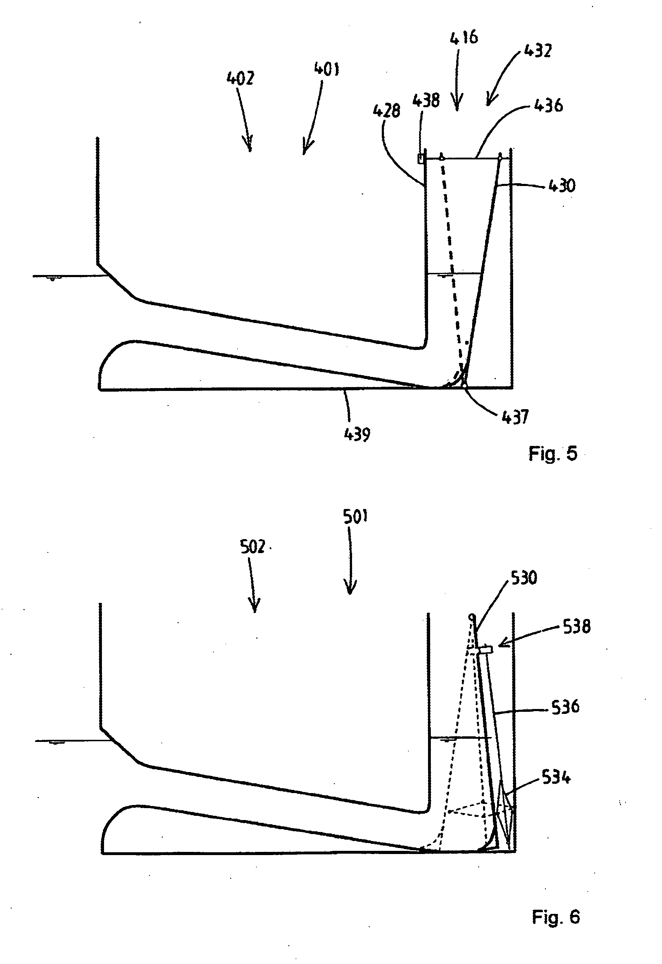

A wave energy conversion system 401, not forming part of the claimed subject-matter, comprises a caisson 402, a free surface chamber 416, a front wall 428, and a displaceable back wall 430 with displacement means 432 comprising a screw spindle 436 and an electromotor 438. The screw spindle 436 is connected to a top part of the displaceable back wall 430. Movable connection means, in this embodiment a hinge 437, connects the displaceable back wall 430 to a bottom part 439 of the caisson 402. Operating the electromotor 438, in a manner as described in relation to the first embodiment, causes the displaceable back wall 430 to move towards or from the front wall 428 along the screw spindle 436. It is noted that the embodiments of fig. 5 and 6 the free surface area is not constant, as most settings of the displacement means result in a tilted displaceable back wall 430. This results in a non-linear mass-spring system.

A wave energy conversion system 501, not forming part of the claimed subject-matter, comprises a caisson 502, a free surface chamber 516, a front wall 528, a displaceable back wall 530, and displacement means 532 comprising one hinged push bar parallelogram 534, a screw spindle 536 and an electromotor 538. Operating the electromotor 538 results in the parallelogram 534 becoming wider or smaller, as in the first disclosed embodiment, which translates into a rotation of the displaceable back wall 530 around a connection means in the form of a hinge 537 which rotatably connects the moveable back wall 530 with a non shown top part of the caisson 502.

The caisson of each of the embodiments is preferably made of concrete. However, other materials such a metals or plastics may be used within the scope of the invention as well. The movable back wall of each of the embodiments is preferably made from steel, however other materials such as plastics or other metals fall within the inventive scope as well.

The invention is not restricted to the disclosed embodiments, and variants are covered by the attached claims. Instead of an electromotor other drive means may be used as well, such as a hydraulic motor. Instead of displacing a back wall, one or more of the other walls, such as a front wall and/or a side wall may be displaced in order to change the area of the free surface. Other dimensions may be chosen in view of different environmental and design criteria. Alternative energy conversion devices may be used within the inventive concept. These concepts may use different forms of the fluid-dynamic energy of the water and/or the air, i.e. the potential energy of the water, the kinetic energy of the water, the kinetic energy of the air and/or the energy in the overpressure of the air compared to the outside pressure. An alternative energy conversion device may use a water overflow in the free surface chamber at a higher level than the mean water level, such that water tops off at its highest point and flows back through a normal low head water turbine back to still water level.

## Claims

1. Wave energy conversion system (1), comprising a water duct (14), a free surface chamber (16), and an energy conversion device (18), wherein:
the free surface chamber (16) is delimited by walls (28, 30),
the free surface chamber (16) is in use partially filled with a liquid and partially filled with a gas,
the free surface chamber (16) defines a free surface (54) at a level (52) where the liquid adjoins the gas, the free surface having a free surface area,
the water duct (14) extends from a first end (10) which is open to a water basin (8) to a second end (12) which is open to the free surface chamber (16), such that in use the water duct (14) is filled with the liquid and the liquid in the free surface chamber (16) and the water duct (14) forms a mass-spring system wherein surface waves in the water basin cause the free surface (54) to rise and fall periodically, and
the energy conversion device (18) is arranged to convert fluid-dynamic energy of the liquid or the gas into a different form of energy, **characterised in that**
at least one of the walls (30) is displaceable linearly, and that
the system further comprises displacement means (32), which displacement means (32) are operable for displacing the displaceable wall (30) such that the size of the free surface area is adjustable in order to adjust the natural period of the mass-spring system.

2. Wave energy conversion system according to claim 1, further comprising control means, wherein the control means are adapted to determine a peak period of a current sea wave pattern of the sea, and to control the displacement means (32) such, that the natural period of the mass-spring system corresponds to the peak period.

3. Wave energy conversion system according to claim 1, or 2, wherein the displacement means (332) comprise at least one push bar (334) which is connected at a first end with first movable connection means (335) to the displaceable wall (330) and at a second end with second movable connection means (335) to a fixed part (331) of the wave energy conversion system (301).

4. Wave energy conversion system according to any of the preceding claims, wherein the water duct (14) has a substantially constant cross-sectional area, and the displaceable wall (30) is displaceable such, that the free surface area is adjustable from half the cross-sectional area of the water duct (14) to three times, preferably two times, the cross-sectional area of the water duct (14).

5. Wave energy conversion system according to any of the preceding claims, wherein the first end of the water duct (14) merges into an oblique upper wall section (44), which is at an angle of 20° to 60° with a horizontal plane.

6. Wave energy conversion system according to any of the preceding claims, wherein the first end of the water duct (14) merges into a convex lower wall section (46).

7. Wave energy conversion system according to any of the preceding claims, wherein the displaceable wall (30) is positioned opposite the second end of the water duct (14).

8. Wave energy conversion system according to any of the preceding claims, wherein the second end of the water duct (14) is positioned lower than the first end of the water duct (14).

9. Wave energy conversion system according to any of the preceding claims, wherein the volume of the free surface chamber (16), with the displaceable wall (30) positioned such that the free surface area is maximal, equals at least the water volume of one wave with maximum operational height and length.

10. Wave energy conversion system according to any of the preceding claims, further comprising an air duct (50), wherein the air duct extends from the free surface chamber (16) to the environment of the system, so that in use the air duct (50) provides a gas connection between the gas in the free surface chamber (16) and outside air.

11. Wave energy conversion system according to any of the preceding claims, wherein a wall of the free surface chamber (16) is positioned opposite the second end of the water duct (14), which wall has a concavely curved lower section.

12. Method for converting wave energy, comprising
providing a wave energy conversion system (1), according to any one of claims 1-11, in a sea (8), such that the second end of the water duct (14) is below a design low water level and that sea water enters the free surface chamber (16) through the water duct (14), and
displacing the displaceable wall (30) linearly for adjusting the size of the free surface area in order to adjust the natural period of the mass-spring system.

13. Method for converting wave energy according to claim 12, further comprising determining a peak period of a current sea wave pattern of the sea, wherein the displaceable wall (30) is displaced such, that the natural period of the mass-spring system corresponds to the peak period.

## Patentansprüche

1. Wellenenergieumwandlungssystem (1), umfassend eine Wasserleitung (14), eine Freiflächen-Kammer (16) sowie eine Energieumwandlungsvorrichtung (18), wobei
die Freiflächen-Kammer (16) durch Wände (28, 30) begrenzt ist, die Freiflächen-Kammer (16) während des Betriebes teilweise mit einer Flüssigkeit und teilweise mit einem Gas gefüllt ist,
die Freiflächen-Kammer (16) eine Freifläche (54) auf einem Niveau (52) definiert, auf dem die Flüssigkeit an das Gas angrenzt, wobei die Freifläche ein freien Flächenfeld aufweist,
sich die Wasserleitung (14) von einem ersten, in ein Wasserbecken (8) mündenden Ende (10) zu einem zweiten Ende (12) erstreckt, das in die Freiflächen-Kammer (16) mündet, so dass die Wasserleitung (14) während des Betriebes mit der Flüssigkeit gefüllt ist, und die Flüssigkeit in der Freiflächen-Kammer (16) zusammen mit der Wasserleitung (14) ein Masse-Feder-System bildet, wobei Oberflächenwellen im Wasserbecken zu einem periodischen Anstieg und Abfall der Freifläche (54) führen, und
die Energieumwandlungsvorrichtung (18) so angeordnet ist, dass fluiddynamische Energie der Flüssigkeit oder des Gases in eine andere Energieform umgewandelt wird, **dadurch gekennzeichnet, dass**
zumindest eine der Wände (30) linear verlagerbar ist, und dass das System ferner Verlagemngsmittel (32) umfasst, wobei die Verlagemngsmittel (32) zum Verlagern der verlagerbaren Wand (30) so ansteuerbar sind, dass die Größe des freien Flächenfelds einstellbar ist, um die natürliche Schwingungsdauer des Masse-Feder-Systems einzustellen.

2. Wellenenergieumwandlungssystem gemäß Anspruch 1, ferner umfassend Steuermittel, wobei die Steuermittel zur Bestimmung einer SpitzenSchwingungsdauer eines momentanen Meerwellenverlaufs des Meeres und zur Ansteuerung der Verlageningsmittel (32) dienen, so dass die natürliche Schwingungsdauer des Masse-Feder-Systems mit der Spitzen-Schwingungsdauer übereinstimmt.

3. Wellenenergieumwandlungssystem gemäß Anspruch 1 oder 2, wobei die Verlageningsmittel (332) zumindest eine Schubstange (334) umfassen, die an einem ersten Ende mit ersten beweglichen Verbindungsmitteln (335) mit der verlagerbaren Wand (330) und an einem zweiten Ende mit zweiten beweglichen Verbindungsmitteln (335) mit einem feststehenden Teil (331) des Wellenenergieumwandlungssystems (301) verbunden sind.

4. Wellenenergieumwandlungssystem gemäß einem der vorigen Ansprüche, wobei die Wasserleitung (14) eine im Wesentlichen konstante Querschnittsfläche aufweist und die verlagerbare Wand (30) so verlagerbar ist, dass das freie Flächenfeld von der halben Querschnittsfläche der Wasserleitung (14) auf die dreifache, vorzugsweise zweifache, Querschnittsfläche der Wasserleitung (14) anpassbar ist.

5. Wellenenergieumwandlungssystem gemäß einem der vorigen Ansprüche, wobei das erste Ende der Wasserleitung (14) in einen schrägen oberen Wandabschnitt (44) mündet, der unter einem Winkel von 20° bis 60° zu einer horizontalen Ebene geneigt ist.

6. Wellenenergieumwandlungssystem gemäß einem der vorigen Ansprüche, wobei das erste Ende der Wasserleitung (14) in einen konvexen unteren Wandabschnitt (46) mündet.

7. Wellenenergieumwandlungssystem gemäß einem der vorigen Ansprüche, wobei die verlagerbare Wand (30) gegenüber dem zweiten Ende der Wasserleitung (14) angeordnet ist.

8. Wellenenergieumwandlungssystem gemäß einem der vorigen Ansprüche, wobei das zweite Ende der Wasserleitung (14) unterhalb des ersten Endes der Wasserleitung (14) angeordnet ist.

9. Wellenenergieumwandlungssystem gemäß einem der vorigen Ansprüche, wobei das Volumen der Freiflächen-Kammer (16), wenn die verlagerbare Wand (30) so angeordnet ist, dass das freie Flächenfeld maximal ist, zumindest gleich dem Wassemolumen einer Welle mit maximaler Betriebshöhe und -länge ist.

10. Wellenenergieumwandlungssystem gemäß einem der vorigen Ansprüche, ferner umfassend eine Luftleitung (50), wobei sich die Luftleitung von der Freiflächen-Kammer (16) in die Umgebung des Systems erstreckt, so dass die Luftleitung (50) während des Betriebs eine Gasverbindung zwischen dem Gas in der Freiflächen-Kammer (16) und der Umgebungsluft bereitstellt.

11. Wellenenergieumwandlungssystem gemäß einem der vorigen Ansprüche, wobei eine Wand der Freiflächen-Kammer (16) gegenüber dem zweiten Ende der Wasserleitung (14) angeordnet ist, wobei die Wand einen konkav gekrümmten unteren Abschnitt aufweist.

12. Verfahren zur Umwandlung von Wellenenergie, umfassend
Bereitstellen eines Wellenenergieumwandlungssystems (1) gemäß einem der Ansprüche 1-11 in einem Meer (8), so dass das zweite Ende der Wasserleitung (14) unterhalb eines unteren Bemessungswasserstandes liegt und dass Meerwasser über die Wasserleitung (14) in die Freiflächen-Kammer (16) eintritt, und
lineares Verlagern der verlagerbaren Wand (30) zum Einstellen der Größe des freien Flächenfelds, so dass die natürliche Schwingungsdauer des Masse-Feder-Systems eingestellt wird

13. Verfahren zur Umwandlung von Wellenenergie gemäß Anspruch 12, ferner umfassend
Bestimmen einer Spitzen-Schwingungsdauer eines momentanen Meerwellenverlaufs des Meeres,
wobei die verlagerbare Wand (30) so verlagert ist, dass die natürliche Schwingungsdauer des Masse-Feder-Systems mit der Spitzen-Schwingungsdauer übereinstimmt.

## Revendications

1. Système de conversion d'énergie des vagues (1), comprenant un conduit à eau (14), une chambre à surface libre (16), et un dispositif de conversion d'énergie (18), dans lequel :
la chambre à surface libre (16) est délimitée par des parois (28, 30),
la chambre à surface libre (16) est, durant l'utilisation, partiellement remplie avec un liquide et partiellement remplie avec un gaz,
la chambre à surface libre (16) définit une surface libre (54) à un niveau (52) où le liquide est contigu au gaz, la surface libre comportant une superficie de surface libre, le conduit à eau (14) s'étend d'une première extrémité (10) qui donne sur un bassin à eau (8) à une seconde extrémité (12) qui donne sur la chambre à surface libre (16), de sorte que, durant l'utilisation, le conduit à eau (14) soit rempli avec le liquide et le liquide dans la chambre à surface libre (16) et le conduit à eau (14) forme un système à ressort massique, dans lequel des vagues de surface dans le bassin à eau font en sorte que la surface libre (54) s'élève et s'abaisse périodiquement, et
le dispositif de conversion d'énergie (18) est agencé pour convertir de l'énergie dynamique des fluides du liquide ou du gaz en une forme différente d'énergie, **caractérisé en ce que**
au moins une des parois (30) est déplaçable linéairement, et que
le système comprend en outre des moyens de déplacement (32), lesquels moyens de déplacement (32) sont utilisables pour déplacer la paroi déplaçable (30) de sorte que la taille de la superficie de surface libre soit réglable afin de régler la période propre du système à ressort massique.

2. Système de conversion d'énergie des vagues selon la revendication 1, comprenant en outre des moyens de commande, dans lequel les moyens de commande sont adaptés pour déterminer une période de pointe d'un rythme actuel de vagues de mer de la mer, et pour commander les moyens de déplacement (32) de sorte que la période propre du système à ressort massique corresponde à la période de pointe.

3. Système de conversion d'énergie des vagues selon la revendication 1 ou 2, dans lequel les moyens de déplacement (332) comprennent au moins une barre-poussoir (334) qui est raccordée, à une première extrémité, avec des premiers moyens de raccordement mobiles (335), à la paroi déplaçable (330) et, à une seconde extrémité, avec des seconds moyens de raccordement mobiles (335), à une partie fixe (331) du système de conversion d'énergie des vagues (301).

4. Système de conversion d'énergie des vagues selon une quelconque des revendications précédentes, dans lequel le conduit à eau (14) possède une superficie de section transversale sensiblement constante, et la paroi déplaçable (30) est déplaçable de sorte que la superficie de surface libre soit réglable de la moitié de la superficie de section transversale du conduit à eau (14) à trois fois, de préférence deux fois, la superficie de section transversale du conduit à eau (14).

5. Système de conversion d'énergie des vagues selon une quelconque des revendications précédentes, dans lequel la première extrémité du conduit à eau (14) fusionne en une section de paroi supérieure oblique (44), qui est à un angle de 20° à 60° par rapport à un plan horizontal.

6. Système de conversion d'énergie des vagues selon une quelconque des revendications précédentes, dans lequel la première extrémité du conduit à eau (14) fusionne en une section de paroi inférieure convexe (46).

7. Système de conversion d'énergie des vagues selon une quelconque des revendications précédentes, dans lequel la paroi déplaçable (30) est positionnée en face de la seconde extrémité du conduit à eau (14).

8. Système de conversion d'énergie des vagues selon une quelconque des revendications précédentes, dans lequel la seconde extrémité du conduit à eau (14) est positionnée plus basse que la première extrémité du conduit à eau (14).

9. Système de conversion d'énergie des vagues selon une quelconque des revendications précédentes, dans lequel le volume de la chambre à surface libre (16), avec la paroi déplaçable (30) positionnée de sorte que la superficie de surface libre soit maximale, est égal au moins au volume d'eau d'une vague avec des hauteur et longueur de fonctionnement maximum.

10. Système de conversion d'énergie des vagues selon une quelconque des revendications précédentes, comprenant en outre un conduit à air (50), dans lequel le conduit à air s'étend de la chambre à surface libre (16) à l'environnement du système, pour que, durant l'utilisation, le conduit à air (50) fournisse une liaison gazeuse entre le gaz dans la chambre à surface libre (16) et l'air extérieur.

11. Système de conversion d'énergie des vagues selon une quelconque des revendications précédentes, dans lequel une paroi de la chambre à surface libre (16) est positionnée en face de la seconde extrémité du conduit à eau (14), laquelle paroi comporte une section inférieure incurvée de façon concave.

12. Procédé pour convertir l'énergie des vagues, comprenant :
la fourniture d'un système de conversion d'énergie des vagues (1) selon une quelconque des revendications 1 à 11, dans une mer (8), de sorte que la seconde extrémité du conduit à eau (14) soit en dessous d'un niveau d'eau bas de conception et que de l'eau de mer entre dans la chambre à surface libre (16) à travers le conduit à eau (14), et
le déplacement linéaire de la paroi déplaçable (30) pour régler la taille de la superficie de surface libre afin de régler la période propre du système à ressort massique.

13. Procédé pour convertir l'énergie des vagues selon la revendication 12, comprenant en outre :
la détermination d'une période de pointe d'un rythme actuel de vagues de mer de la mer,
dans lequel la paroi déplaçable (30) est déplacée de sorte que la période propre du système à ressort massique corresponde à la période de pointe.
